# EUROPÄISCHE PATENTSCHRIFT

(11) **EP 2 139 647 B1**
(45) Veröffentlichungstag und Bekanntmachung des Hinweises auf die Patenterteilung: **27.04.2011**
(21) Anmeldenummer: 08716963.7
(22) Anmeldetag: 20.02.2008
(51) Int. Cl.: B25F 5/00, F16H 21/52

(54) **MOTORISCH ANGETRIEBENE WERKZEUGMASCHINE**
MOTOR-DRIVEN MACHINE TOOL
MACHINE-OUTIL ENTRAÎNÉE PAR UN MOTEUR

(30) Priorität: 19.04.2007 DE 102007018464
(43) Veröffentlichungstag der Anmeldung: 06.01.2010
(73) Patentinhaber: Robert Bosch GmbH, 70442 Stuttgart (DE)
(72) Erfinder: ZAISER, Adolf, 73257 Koengen (DE); BLUM, Jens, 70794 Filderstadt (DE); ROEHM, Heiko, 70176 Stuttgart (DE)
(86) Internationale Anmeldenummer: PCT/EP2008/052042
(87) Internationale Veröffentlichungsnummer: WO 2008/128803

(56) Entgegenhaltungen:
- EP-A- 0 351 179
- EP-A- 0 990 809
- EP-A- 1 610 033
- DE-A1- 3 811 828
- DE-A1- 4 314 166
- DE-B- 1 300 755
- DE-C1- 4 038 839
- DE-U1- 20 211 197
- DE-U1- 29 822 647
- GB-A- 2 413 300
- US-A- 4 031 622
- US-A1- 2003 029 257

## Beschreibung

Die Erfindung bezieht sich auf eine motorisch angetriebene Werkzeugmaschine, insbesondere eine Handwerkzeugmaschine, mit einer von einer Antriebseinheit angetriebenen Antriebswelle und einer Werkzeug- bzw. Abtriebswelle, auf der das Werkzeug aufgenommen ist, nach dem Oberbegriff des Anspruches 1.

### Stand der Technik

In der DE 10 2004 050 798 A1 wird eine Handwerkzeugmaschine mit oszillierend antreibbarer Werkzeugwelle beschrieben, die ein Werkzeug aufnimmt, welches aufgrund des oszillierenden Antriebs eine Drehpendelbewegung ausführt, wodurch das Werkzeug sowohl zum Schleifen als auch zum Schneiden verwendet werden kann. Die Werkzeugwelle mit dem darauf angeordneten Werkzeug wird von einer Exzenterkoppeleinrichtung betätigt, die von einem Elektromotor angetrieben wird. Hierbei treibt die Motorwelle des Elektromotors eine Exzenterscheibe an, in die ein mit der Werkzeugwelle drehfest verbundener Arm eingreift, so dass eine Drehbewegung der Exzenterscheibe eine oszillatorische Bewegung des Arms und damit auch der Werkzeugwelle erzeugt.

Bei derartigen Antrieben ist darauf zu achten, dass bei der Bewegungsübertragung zwischen der Motorwelle und der Werkzeugwelle keine unzulässig hohen Kräfte in einer der Wellen bzw. der Koppeleinrichtung zur Übertragung der Bewegung auftreten. Alle an der Bewegungsübertragung beteiligten Bauteile dürfen ein nur verhältnismäßig geringes Spiel aufweisen, um einem schnellen Verschleiß vorzubeugen, der bei Spielvergrößerung durch Schlagen und Hämmern zwischen den bewegungsübertragenden Bauteilen rasch anwachsen kann. Bei einem zu geringen Spiel, welches beispielsweise über eine höhere Vorspannung erreicht werden kann, besteht andererseits die Gefahr einer reibungsbedingten Überhitzung der dynamisch hoch belasteten Wälzlager.

Aus der EP 0 351179 A1 ist ein Akku-Bohrer bekannt, der einen elektrischen Antriebsmotor zum Antrieb einer Werkzeugwelle aufweist. Die Motorwelle des Antriebsmotors liegt koaxial zur Werkzeugwelle, die Verbindung zwischen Motorwelle und Werkzeugwelle erfolgt über ein Getriebe.

In der GB 2 413 300 A wird eine elektrische Handbohrmaschine beschrieben, bei der die Motorwelle parallel zur Werkzeugwelle verläuft. Die Motorwelle ist über eine Kupplung mit einer koaxialen Zwischenwelle verbunden, die in zwei Lagern außerhalb des Motorgehäuses drehbar aufgenommen ist. Die Drehbewegung der Zwischenwelle wird mittels eines Getriebes in eine Drehbewegung der Werkzeugwelle umgesetzt.

### Offenbarung der Erfindung

Der Erfindung liegt die Aufgabe zugrunde, mit einfachen konstruktiven Maßnahmen eine motorisch angetriebene Werkzeugmaschine mit drehbar anzutreibendem Werkzeug anzugeben, die sich durch einen geringen Verschleiß und eine geringe Wärmeentwicklung auszeichnet.

Diese Aufgabe wird erfindungsgemäß mit den Merkmalen des Anspruches 1 gelöst. Die Unteransprüche geben zweckmäßige Weiterbildungen an.

Die motorisch angetriebene Werkzeugmaschine, bei der es sich insbesondere um eine Handwerkzeugmaschine mit einem Werkzeug handelt, welches eine oszillierende Drehpendelbewegung ausführt, weist eine Antriebseinheit auf, eine von der Antriebseinheit betätigte Antriebswelle und eine Werkzeugwelle, auf der das Werkzeug aufgenommen ist, wobei die Drehbewegung der Antriebswelle mittels einer Koppeleinrichtung auf die Werkzeugwelle übertragen wird. Erfindungsgemäß ist vorgesehen, dass die Antriebswelle in zwei Drehlagern im Gehäuse der Werkzeugmaschine drehbar aufgenommen ist, wobei die Koppeleinrichtung in dem zwischenliegenden Abschnitt zwischen den beiden Drehlagern an der Antriebswelle angreift. Diese Ausführung weist den Vorteil auf, dass die Antriebswelle sehr steif im Gehäuse der Werkzeugmaschine gelagert werden kann, so dass die auf die Antriebswelle wirkenden Kräfte über die stabilen Drehlagerungen in das Gehäuse der Werkzeugmaschine eingeleitet werden können. Die Antriebseinheit muss lediglich ein querkraftfreies Drehmoment auf die Antriebswelle übertragen. Im Falle einer Ausführung der Antriebseinheit als Elektromotor erfolgt diese insbesondere in der Weise, dass der Rotor bzw. die Ankerwelle des Elektromotors koaxial zur Antriebswelle angeordnet ist und mit dieser direkt oder über ein Kupplungsglied verbunden ist. Biegemomente, welche durch die Kopplung zwischen der Antriebseinheit und der Antriebswelle einerseits und der Werkzeugwelle und der Antriebswelle andererseits entstehen können, müssen nicht mehr von der Antriebswelle aufgenommen werden, derartige Biegemomente werden vielmehr über die beiden Drehlager der Antriebswelle auf das Gehäuse der Werkzeugmaschine übertragen.

Die beiden gehäuseseitigen Drehlager der Antriebswelle erlauben eine weitestgehend spielfreie Lagerung, wodurch auch über längere Betriebszeiten der Verschleiß reduziert ist. Aufgrund der hohen Präzision der Lagerung der Antriebswelle kann zugleich die Reibung niedrig gehalten werden, so dass auch die Gefahr einer starken Wärmeentwicklung und einer Überhitzung reduziert ist. Ein weiterer Vorteil liegt in der Reduzierung von Motorvibrationen, da der Antriebsmotor lediglich ein näherungsweise querkraftfreies Drehmoment auf die Antriebswelle übertragen muss. Dadurch ist es außerdem möglich, kleiner bauende Antriebseinheiten einzusetzen, was mit einer geringeren Stromaufnahme und einer längeren Akkustandzeit einhergeht.

Die Antriebs und Werkzeugwelle sind winklig zueinander angeordnet, sie nehmen insbesondere einen 90°-Winkel zueinander ein.

Im Gehäuse der Werkzeugmaschine kann ein Lagertopf zur Aufnahme eines Drehlagers der Antriebswelle ausgebildet sein, wobei der Lagertopf vorteilhafterweise zugleich die Stirnseite der Antriebswelle aufnimmt. Dieser Lagertopf ist einteilig mit dem Gehäuse ausgebildet, so dass die im Lagertopf wirkenden Kräfte unmittelbar in die Gehäusewandung eingeleitet werden. Gemäß einer vorteilhaften Weiterbildung ist der Lagertopf zwischen Antriebswelle und Werkzeugwelle angeordnet; diese Ausführung eignet sich insbesondere zur Anwendung bei winklig positionierter Antriebswelle und Werkzeugwelle. Der Vorteil dieser Ausführung liegt in der kompakten Bauform, da der Lagertopf neben der Koppeleinrichtung zur Bewegungsübertragung zwischen Antriebs- und Werkzeugwelle angeordnet werden kann, was keinen zusätzlichen Bauraum benötigt.

Als Antriebseinheit kommt insbesondere ein Elektromotor in Betracht, auch wenn alternative Antriebseinheiten wie zum Beispiel hydraulische oder pneumatische Antriebe denkbar sind. Im Falle eines Elektromotors wird dessen Gehäuse auf der dem Rotor benachbarten Seite am Werkzeugmaschinengehäuse abgestützt, da die Verbindung zwischen dem Rotor des Elektromotors und der Antriebswelle lediglich zur Drehmomentübertragung dient, nicht jedoch nur Abstützung des Elektromotors. Dies erfolgt vielmehr über die Abstützeinrichtung zwischen den Gehäusen von Elektromotor und Werkzeug.

Der Rotor der Antriebseinheit kann auf verschiedene Arten mit der Antriebswelle verbunden werden. Möglich ist sowohl eine lösbare als auch eine unlösbare Verbindung, wobei die unlösbare als Pressverbindung und die lösbare zweckmäßigerweise als Formschlussverbindung ausgeführt ist. Eine derartige Formschlussverbindung wird beispielsweise mithilfe eines Kupplungsstücks erreicht, das auf den Rotor der Antriebseinheit aufgesetzt wird und zweckmäßigerweise in eine profilierte Bohrung in der Stirnseite der Antriebswelle eingeschoben wird. Die Koppeleinrichtung zwischen der Antriebswelle und der Werkzeugwelle ist vorzugsweise als Exzenterkoppeleinrichtung ausgebildet, über die die Drehbewegung der Antriebswelle in eine Drehpendelbewegung der Werkzeugwelle übertragen wird. Die Exzenterkoppeleinrichtung umfasst hierfür zweckmäßigerweise ein Koppelglied und ein Exzenterglied, wobei Letzteres auf einer der Wellen aufsitzt und mit dem Koppelglied, das mit der jeweils anderen Welle verbunden ist, in Wirkverbindung steht. Als Exzenterglied kommt insbesondere ein Exzenternocken in Betracht, wohingegen das Koppelglied beispielsweise gabelförmig ausgeführt sein kann und die Gabelzinken das Exzenterglied umgreifen.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch eine nicht erfindungsgemäße Handwerkzeugmaschine, deren Werkzeug eine oszillierende Drehpendelbewegung zum Sägen und/oder Schleifen ausführt, mit einem elektrischen Antriebsmotor, dessen Rotor eine koaxiale Antriebswelle antreibt, die unabhängig vom Rotor an zwei Drehlagern im Gehäuse drehbar gelagert ist, wobei die Werkzeugwelle, an der das Werkzeug aufgenommen ist, parallel zum Rotor und zur Antriebswelle angeordnet ist,
- Fig. 2: eine Handwerkzeugmaschine in einer alternativen Ausführung, bei der der Rotor des Antriebsmotors und die Antriebswelle in einem 90°-Winkel zur Werkzeugwelle stehen, wobei die Antriebswelle über ein Kupplungsstück mit dem Rotor drehgekoppelt ist,
- Fig. 3: die Verbindung zwischen Rotor und Antriebswelle mittels des Kupplungsstücks in vergrößerter Ansicht,
- Fig. 4: das Kupplungsstück in Draufsicht.

In den Figuren sind gleiche Bauteile mit gleichen Bezugszeichen versehen.

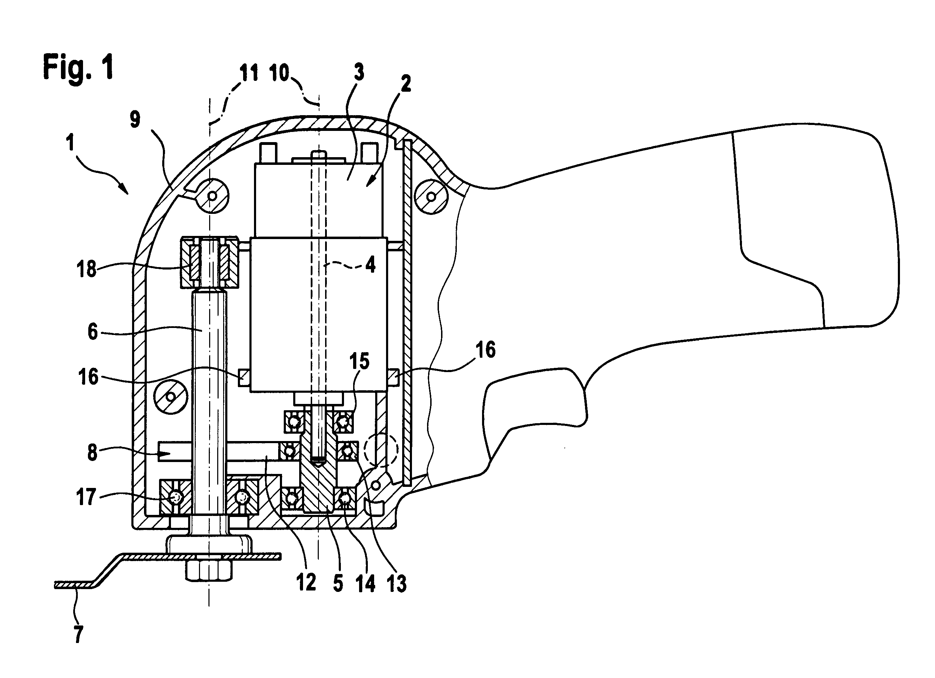

Die in Fig. 1 dargestellte Handwerkzeugmaschine 1 weist als Antriebseinheit einen elektrischen Antriebsmotor 2 auf, der im Gehäuse 9 der Werkzeugmaschine gehalten ist und dessen Rotor 4 eine koaxial angeordnete Antriebswelle 5 drehbeaufschlagt. Ein Werkzeug 7 ist drehfest auf einer Werkzeugwelle 6 gehalten, die parallel zum Rotor 4 und der Antriebswelle 5 angeordnet ist; mit Bezugszeichen 10 und 11 sind die jeweiligen Drehachsen von Rotor 4 bzw. Antriebswelle 5 und Werkzeugwelle 6 dargestellt, die parallel zueinander liegen. Die Antriebswelle 5 wird von dem Rotor 4 des Antriebsmotors 2 in eine Drehbewegung versetzt, die über eine Exzenterkoppeleinrichtung 8 in eine oszillierende Pendelbewegung der Werkzeugwelle 6 umgesetzt wird. Diese zwischen Werkzeugwelle 6 und Antriebswelle 5 angeordnete Exzenterkoppeleinrichtung 8 umfasst eine Koppelgabel 12, die drehfest auf der Werkzeugwelle 6 aufsitzt, sowie einen Exzenternocken 13, der drehfest auf der Antriebswelle 5 angeordnet ist. Die Koppelgabel 12 weist Gabelzinken auf, die den Exzenternocken 13 umgreifen und die Kontur des Exzenternockens abtasten. Bei einer Drehbewegung der Antriebswelle 5 wird somit die bezogen auf die Drehachse 10 exzentrische Kontur des Exzenternockens über die Koppelgabel 12 auf die Werkzeugwelle 6 übertragen, die daraufhin die Drehpendelbewegung ausführt.

Um die Antriebswelle 5 möglichst frei von Biegekräften zu halten, ist die Antriebswelle unabhängig vom Rotor 4 des elektrischen Antriebsmotors 2 in zwei gehäuseseitigen Drehlagern 14 und 15 drehbar aufgenommen. Der Rotor 4 überträgt lediglich ein antreibendes Drehmoment um die Drehachse 10 auf die Antriebswelle 5, darüber hinaus jedoch keine oder keine wesentlichen weiteren Momente bzw. Kräfte. Da dem Motorgehäuse des Elektromotors 2 die gehäuseseitige Abstützung über die Antriebswelle 5 fehlt, greifen am Motorgehäuse zusätzliche Abstützeinrichtungen 16 an, über die das Motorgehäuse am Werkzeugmaschinengehäuse abgestützt ist.

Zur Reduzierung der auf die Antriebswelle 5 wirkenden Belastungen greift die Koppeleinrichtung 8 in dem zwischenliegenden Abschnitt zwischen den Drehlagern 14 und 15 an der Antriebswelle 5 an. Dies wird dadurch realisiert, dass der Exzenternocken 13 als Bauteil der Exzenterkoppeleinrichtung 8 in diesem zwischenliegenden Abschnitt angeordnet ist.

Des Weiteren ist zur Realisierung einer möglichst kompakten Bauform vorgesehen, dass sich die Werkzeugwelle 6 bis in den Bereich des Motorgehäuses des elektrischen Antriebsmotors 2 erstreckt, so dass ein Abschnitt der Werkzeugwelle 6 parallel zum Motorgehäuse liegt. Die Werkzeugwelle 6 ist in zwei gehäuseseitigen Drehlagern 17 und 18 drehbar aufgenommen, wobei sich das dem Werkzeug 7 benachbarte erste Drehlager 17 in Höhe und parallel zu dem Drehlager 14 der Antriebswelle 5 befindet, wohingegen das zweite Drehlager 18 der Werkzeugwelle 6 neben dem Motorgehäuse des elektrischen Antriebsmotors angeordnet ist. Die Koppelgabel 12 der Exzenterkoppeleinrichtung 8 greift im zwischenliegenden Abschnitt zwischen den Drehlagern 17 und 18 an der Werkzeugwelle 6 an.

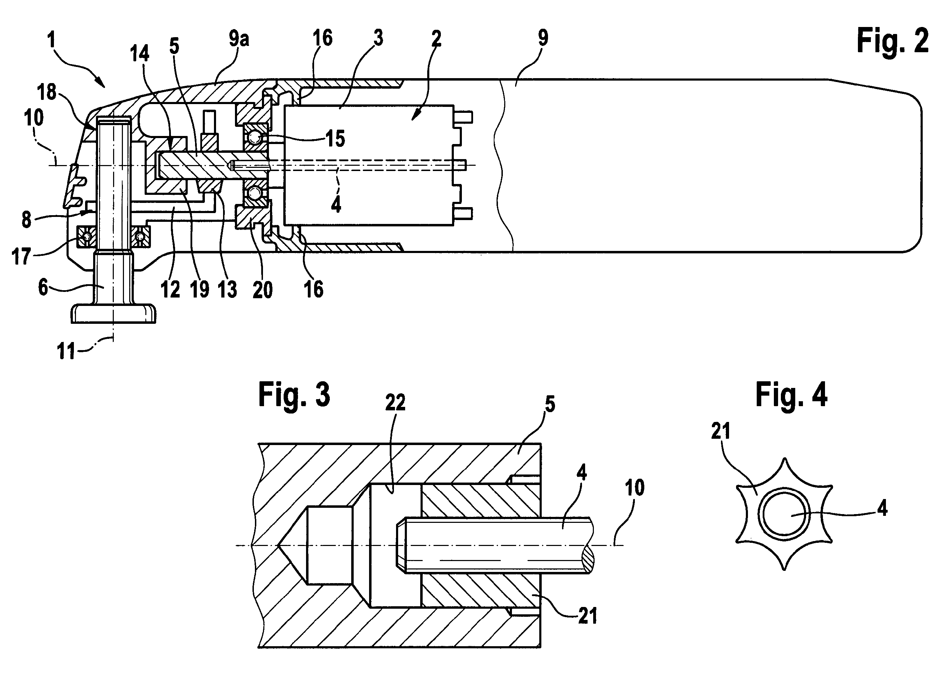

Im Ausführungsbeispiel nach Fig. 2 ist die Handwerkzeugmaschine ebenfalls mit einem eine oszillierende Drehpendelbewegung ausführenden Werkzeug auf einer Werkzeugwelle 6 ausgestattet, wobei die Werkzeugwelle 6 im Unterschied zum vorhergehenden Ausführungsbeispiel in einem 90°-Winkel zur Antriebswelle 5 angeordnet ist, die von dem Rotor 4 des elektrischen Antriebsmotors 2 angetrieben wird. Die Antriebswelle 5 ist wiederum in zwei Drehlagern 14 und 15 drehbar in einem Getriebegehäuse 9a gelagert, welches Bestandteil des Werkzeugmaschinengehäuses 9 ist, jedoch gegenüber dem Hauptteil des Gehäuses abnehmbar ist. Das Drehlager 14 ist in einem Lagertopf 19 aufgenommen, der einteilig mit dem Gehäuse 9a ausgebildet ist. Dieser Lagertopf 19, in den die Stirnseite der Antriebswelle 5 einragt, befindet sich im zwischenliegenden Raum zwischen Werkzeugwelle 6 und Antriebswelle 5. Der Lagertopf 19 verzweigt von einem Gehäuseabschnitt, in dem das zweite Drehlager 18 der Werkzeugwelle 6 positioniert ist.

Die Antriebswelle 5 mit dem darauf angeordneten Exzenternocken 13 als Bestandteil der Exzenterkoppeleinrichtung kann einschließlich des Drehlagers 15 sowie eines gehäuseseitig anzuordnenden Gegenlagers 20 als vorgefertigtes Modul ausgebildet sein, das insgesamt in das Gehäuse der Handwerkzeugmaschine eingeführt wird. Gemäß einer weiteren vorteilhaften Ausführung ist die Antriebswelle einschließlich Exzenternocken 13 und Drehlager 15 sowie dem Gegenlager 20 mit dem Rotor des elektrischen Antriebsmotors 2 verpresst und bildet somit mit dem elektrischen Antriebsmotor ein zusammenhängendes, vorab zu fertigendes Modul, das in das Gehäuse eingesetzt wird, wobei lediglich die Stirnseite der Antriebswelle 5 in den Lagertopf 19 einzuführen und das Gegenlager 20 fest mit dem Gehäuse zu verbinden ist. Außerdem wird das Motorgehäuse des Stators 3 des elektrischen Antriebsmotors 2 über die Abstützeinrichtungen 16 am Gehäuse 9 gehalten.

In Fig. 3 ist ein Ausschnitt im Bereich der Verbindung zwischen Rotor und Antriebswelle 5 dargestellt. Die Verbindung erfolgt in dieser Ausführung in Umfangsrichtung formschlüssig und axial lösbar. Hierfür ist ein Kupplungsstück 21 vorgesehen, das auf den Rotor 4 aufgesetzt wird und, wie in Fig. 4 dargestellt ist, mit einem sternförmigen Profil versehen ist. Dieses Kupplungsstück.21 wird in eine Bohrung 22 eingeschoben, die in die axiale Stirnseite der Antriebswelle 5 eingebracht ist und eine entsprechende Profilierung aufweist, um in Drehrichtung den Formschluss herzustellen.

Gemäß einer alternativen Ausführung ist das Kupplungsstück an der Stirnseite der Antriebswelle angeordnet und wird in eine Bohrung mit entsprechender Profilierung an der Stirnseite des Rotors 4 eingesetzt.

## Patentansprüche

1. Motorisch angetriebene Werkzeugmaschine, insbesondere Handwerkzeugmaschine (1) mit drehbar anzutreibendem Werkzeug (7), mit einer von einer Antriebseinheit (2) angetriebenen Antriebswelle (5) und einer Abtriebs- bzw. Werkzeugwelle (6), auf der das Werkzeug (7) aufgenommen ist, wobei die Drehbewegung der Antriebswelle (5) über eine Koppeleinrichtung (8) auf die Werkzeugwelle (6) übertragbar ist, die Antriebswelle (5) in zwei Drehlagern (14, 15) im Gehäuse (9) der Werkzeugmaschine (1) drehbar aufgenommen ist und die Koppeleinrichtung (8) im Abschnitt zwischen den beiden Drehlagern (14, 15) an der Antriebswelle (5) angreift,
**dadurch gekennzeichnet, dass** Antriebswelle (5) und Werkzeugwelle (6) winklig zueinander angeordnet sind, dass im Gehäuse (9) der Werkzeugmaschine (1) ein Lagertopf (19) zur Aufnahme eines Drehlagers (14) und der Stirnseite der Antriebswelle (5) ausgebildet ist und dass der Lagertopf (19) zwischen der Antriebswelle (5) und der Werkzeugwelle (6) angeordnet ist.

2. Werkzeugmaschine nach Anspruch 1,
**dadurch gekennzeichnet, dass** Antriebswelle (5) und Werkzeugwelle (6) in einem 90°-Winkel zueinander stehen.

3. Werkzeugmaschine nach einem der Ansprüche 1 oder 2,
**dadurch gekennzeichnet, dass** die Antriebseinheit (2) als Elektromotor ausgeführt und der Rotor (4) des Elektromotors (2) die Antriebswelle (5) antreibt.

4. Werkzeugmaschine nach Anspruch 3,
**dadurch gekennzeichnet, dass** das Motorgehäuse des Elektromotors (2) auf der dem Rotor (4) benachbarten Seite am Werkzeugmaschinengehäuse (9) abgestützt ist.

5. Werkzeugmaschine nach einem der Ansprüche 1 bis 4,
**dadurch gekennzeichnet, dass** der Rotor (4) der Antriebseinheit (2) lösbar mit der Antriebswelle (5) verbunden ist.

6. Werkzeugmaschine nach einem der Ansprüche 1 bis 5,
**dadurch gekennzeichnet, dass** der Rotor (4) der Antriebseinheit (2) formschlüssig mit der Antriebswelle (5) verbunden ist.

7. Werkzeugmaschine nach einem der Ansprüche 1 bis 6.
**dadurch gekennzeichnet, dass** der Rotor (4) der Antriebseinheit (2) über ein Kupplungsstück (21) mit der Antriebswelle (5) verbunden ist.

## Claims

1. Motor-driven power tool, in particular a portable power tool (1), comprising a tool (7) to be rotatably driven, a drive shaft (5) driven by a drive unit (2), and an output or tool shaft (6) on which the tool (7) is accommodated, wherein the rotary movement of the drive shaft (5) can be transmitted to the tool shaft (6) via a coupling device (8), the drive shaft (5) is rotatably accommodated in two rotary bearings (14, 15) in the housing (9) of the power tool (1), and the coupling device (8) engages on the drive shaft (5) in the section between the two rotary bearings (14, 15), **characterized in that** the drive shaft (5) and the tool shaft (6) are arranged at an angle to one another, **in that** a bearing pot (19) for accommodating a rotary bearing (14) and the end face of the drive shaft (5) is formed in the housing (9) of the power tool (1), and **in that** the bearing pot (19) is arranged between the drive shaft (5) and the tool shaft (6).

2. Power tool according to Claim 1, **characterized in that** the drive shaft (5) and the tool shaft (6) are at a 90° angle to one another.

3. Power tool according to either of Claims 1 and 2, **characterized in that** the drive unit (2) is designed as an electric motor and the rotor (4) of the electric motor (2) drives the drive shaft (5).

4. Power tool according to Claim 3, **characterized in that** the motor housing of the electric motor (2) is supported on the power tool housing (9) on the side adjacent to the rotor (4).

5. Power tool according to one of Claims 1 to 4, **characterized in that** the rotor (4) of the drive unit (2) is detachably connected to the drive shaft (5).

6. Power tool according to one of Claims 1 to 5, **characterized in that** the rotor (4) of the drive unit (2) is connected to the drive shaft (5) in a positive-locking manner.

7. Power tool according to one of Claims 1 to 6, **characterized in that** the rotor (4) of the drive unit (2) is connected to the drive shaft (5) via a coupling piece (21).

## Revendications

1. Machine-outil entraînée par un moteur, en particulier machine-outil à main (1), comprenant un outil (7) devant être entraîné en rotation, avec un arbre d'entraînement (5) entraîné par une unité d'entraînement (2) et un arbre de sortie ou arbre d'outil (6), sur lequel est reçu l'outil (7), le mouvement de rotation de l'arbre d'entraînement (5) pouvant être transmis par le biais d'un dispositif d'accouplement (8) à l'arbre d'outil (6), l'arbre d'entraînement (5) étant reçu à rotation dans deux paliers rotatifs (14, 15) dans le boîtier (9) de la machine-outil (1), et le dispositif d'accouplement (8) venant en prise dans la portion entre les deux paliers rotatifs (14, 15) sur l'arbre d'entraînement (5),
**caractérisée en ce que** l'arbre d'entraînement (5) et l'arbre d'outil (6) sont orientés suivant un certain angle l'un par rapport à l'autre, **en ce qu'**un pot de palier (19) est réalisé dans le boîtier (9) de la machine-outil (1) pour recevoir un palier rotatif (14) et le côté frontal de l'arbre d'entraînement (5), et **en ce que** le pot de palier (19) est disposé entre l'arbre d'entraînement (5) et l'arbre d'outil (6).

2. Machine-outil selon la revendication 1,
**caractérisée en ce que** l'arbre d'entraînement (5) et l'arbre d'outil (6) sont orientés suivant un angle de 90° l'un par rapport à l'autre.

3. Machine-outil selon l'une quelconque des revendications 1 ou 2,
**caractérisée en ce que** l'unité d'entraînement (2) est réalisée sous forme de moteur électrique et le rotor (4) du moteur électrique (2) entraîne l'arbre d'entraînement (5).

4. Machine-outil selon la revendication 3,
**caractérisée en ce que** le boîtier de moteur du moteur électrique (2) est supporté du côté adjacent au rotor (4) sur le boîtier de la machine-outil (9).

5. Machine-outil selon l'une quelconque des revendications 1 à 4,
**caractérisée en ce que** le rotor (4) de l'unité d'entraînement (2) est connecté de manière détachable à l'arbre d'entraînement (5).

6. Machine-outil selon l'une quelconque des revendications 1 à 5,
**caractérisée en ce que** le rotor (4) de l'unité d'entraînement (2) est connecté par engagement par correspondance géométrique avec l'arbre d'entraînement (5).

7. Machine-outil selon l'une quelconque des revendications 1 à 6,
**caractérisée en ce que** le rotor (4) de l'unité d'entraînement (2) est connecté par le biais d'un élément d'accouplement (21) à l'arbre d'entraînement (5).
